# EUROPEAN PATENT SPECIFICATION

(11) **EP 1 784 879 B1**
(45) Date of publication and mention of the grant of the patent: **09.04.2008**
(21) Application number: 05758690.1
(22) Date of filing: 08.07.2005
(51) Int. Cl.: H01M 4/92, H01M 4/88, H01M 8/08, H01M 8/10

(54) **CATALYSTS FOR FUEL CELL ELECTRODES BASED ON PLATINUM AND ITS ALLOYS, THE PREPARATION AND USE THEREOF, AS WELL AS FUEL CELLS CONTAINING THEM**
KATALYSATOREN FÜR BRENNSTOFFZELLENELEKTRODEN AUF DER BASIS VON PLATIN UND DESSEN LEGIERUNGEN, HERSTELLUNG UND VERWENDUNG DIESER KATALYSATOREN UND BRENNSTOFFZELLEN ENTHALTEND DIESELBEN
CATALYSEURS POUR ELECTRODES DE PILES A COMBUSTIBLE A BASE DE PLATINE ET DE SES ALLIAGES, LEUR PREPARATION ET LEUR UTILISATION, ET PILES A COMBUSTIBLE CONTENANT CES CATALYSEURS

(30) Priority: 09.07.2004 IT FI20040154
(43) Date of publication of application: 16.05.2007
(73) Proprietor: Acta S.p.A., 56040 Crespina (IT)
(72) Inventor: BARBARO, Pierluigi, I-50019 Sesto Fiorentino (IT); BERT, Paolo, I-22100 Como (IT); BIANCHINI, Claudio, I-50126 Firenze (IT); GIAMBASTIANI, Giuliano, I-50031 Barberino di Mugello (IT); TAMPUCCI, Alessandro, I-57014 Collesalvetti (IT); VIZZA, Francesco, I-50141 Firenze (IT)
(74) Representative: Gervasi, Gemma
(86) International application number: PCT/EP2005/053270
(87) International publication number: WO 2006/005724

(56) References cited:
- WO-A-20/04036674
- US-A- 5 240 893
- US-A1- 2002 132 157
- LENKA S. ET AL.: "SYNTHETIC RESINS: XV. CHELATION ION EXCHANGE PROPERTIES OF 2,4-DINITROPHENYLHYDRAZONE OF RESACETOPHENONE-FORMALDEHYDE RESIN" POLYMER INTERNATIONAL, vol. 29, no. 2, 1992, pages 103-106, XP008031102
- RATH D.K. ET AL.: "SYNTHETIC RESINS XIV. CHELATION ION EXCHANGE PROPERTIES OF 2,4-DINITRO PHENYLHYDRAZONE OF 2-HYDROXY ACETOPHENONE-FORMALDEHYDE RESIN" JOURNAL OF APPLIED POLYMER SCIENCE, vol. 51, no. 9, 28 February 1994 (1994-02-28), pages 1679-1682, XP000464433 ISSN: 0021-8995

## Description

### FIELD OF THE INVENTION

This invention concerns catalysts for both anodes and cathodes of fuel cells.

### STATE OF THE ART

A fuel cell is a device capable to convert directly the chemical energy of a fuel into electrical power. A fuel cell works roughly as a battery, but it never dies, provided the fuel is continuously added. The process of production of electrical power in a fuel cell is silent and without mobile parts, and it occurs with the evolution of heat, water, and in certain case of CO₂, depending on the fuel, which can be either gaseous hydrogen or a compound containing atomic hydrogen. No matter what the fuel is, every cell employs oxygen, pure or atmospheric, as a co-reagent. Oxygen is turned into either water.

Data and general information about fuel cells, their functioning and the actual technology of construction are available in Handbook for fuel cells, W. Vielstick and A. Lamm, Wiley, Vol. I-III; Wiley, New York, 2003; L. Carrette et al. Fuel Cells 2001, 1, 5; O. Okada and K. Yokoyama Fuel Cells 2001, 1, 72.

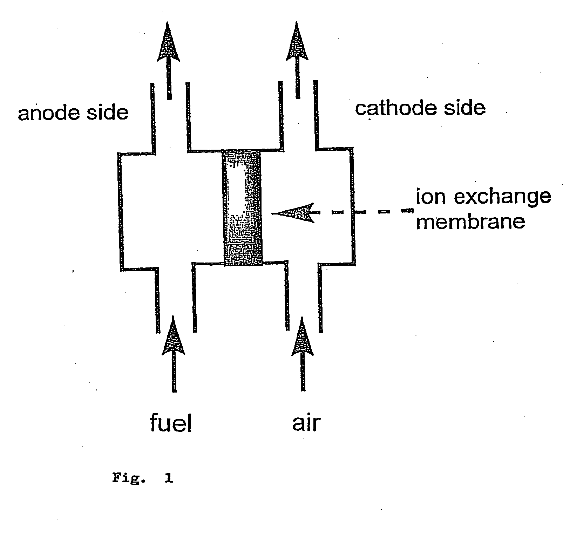

A modem fuel cell with polymeric electrolyte working with pure or combined hydrogen is made up of two electrodes of porous and conductive material, separated by a polymeric membrane permeable to ions, called electrolyte (Figure 1).

Hydrogen-fed fuel cells containing a polymeric membrane as solid electrolyte are known with the acronym PEMFC (*Polymer Electrolyte Membrane Fuel Cell*), whereas fuel cells fed with aqueous solutions of compounds that carry combined hydrogen, generally alcohols, are known with the acronym DFC, which stands for *Direct Fuel Cell.* In case of PEMFCs with membranes permeable to cations only, hydrogen is oxidized at the anode (negative electrode) yielding protons (H⁺) and electrons (e⁻). The protons pass through the membrane towards the cathode (positive electrode), where they provide to the reduction of atmospheric oxygen to water that uses the electrons arrived from the anode.

The use of an anionic-exchange polymeric membrane as electrolyte, i.e. a membrane which allows negative charges only to pass, furthers the production of negative ions, in this case OH⁻, in the process of oxygen reduction at the cathode, while the overall electrochemical process is left unvaried, as well as the reversible voltage of the cell.

In the PEMFCs, the polymeric electrolyte is generally *Nafion*^{®}*,* a proton-exchange fluorinated membrane, about 50-200 micrometers thick. This withholds negatively charged ions (usually sulfonate groups -SO₃⁻) covalently bonded to the polymeric backbone and therefore allows the passage of protons towards the cathode.

Electrons are therefore forced to flow through the outer circuit. Generating a current which can be used to produce work before it returns to the cathode.

*Nafion*^{®}, like other proton exchange polymeric membranes, is most efficient when it works between 70 and 100 °C, thus limiting the functionality of PEMFCs to the same temperature span. The theoretical voltage provided by one PEMFC is about 1.23 V at 25 °C, however real voltages tend to decrease to 0.7-0.8 V, with currents from 300 to 800 mA/cm², as the result of several polarizations due to slow reaction kinetics at the electrodes, mass transport and mass diffusion effects, resistance to the transfer of ions and electrons. Production of heat makes up for the loss in the electrical power. Higher powers and voltages can be achieved by connecting in series more cells with bipolar plates. Such a device is called stack, and more stacks can be assembled to yield even higher powers, by now up to 250 kW. Such systems enjoy of several applications, from the co-generation of power for civil and industrial uses, to mechanical traction.

By DFC (*Direct Fuel Cell*) we mean all the cells in which a fuel different from hydrogen is directly put in contact with the anode with no preventive treatment to extract hydrogen. The most diffused DFC makes use of methanol (CH₃OH), and is known as DMFC (*Direct Methanol Fuel Cell*). A common DMFC of the state of art resembles a PEMFC in its configuration and working. In the DMFCs indeed the electrolyte consists of a polymeric membrane with either proton or anion exchange membrane, and the electrocatalysts contain platinum or platinum alloys with other metals. These cells work best within the usual range of temperature 70-100 °C.

The methanol is oxidized at the anode to yield protons, electrons and CO₂, while the cathode process is wholly similar to the one that takes place in the PEMFCs.

DFCs have a remarkable advantage over hydrogen fuel cells: they can use a vast range of fuel, both liquid (alcohols in general) and solid soluble in water (acids, aldehydes, sugars). These fuels are ultimately transformed into CO₂, water and energy. As a matter of fact, the electrochemical performances change in function of the fuel and the anodic catalyst employed. Direct ethanol fuel cells are exciting much interest because this alcohol, differently from methanol, is much less toxic, and moreover Is a renewable resource, since one can easily get ethanol out of fermentation of a huge variety of biomasses. A DFC differs mostly from a PEMFC in that the former releases CO₂ into the environment. On the other hand, if ethanol is used as a fuel in the DEFCs (*Direct Ethanol Fuel Cell*), the output of carbon dioxide into the environment is offset by the chlorophylian photosynthesis process, which fixes CO₂ in the form of vegetal mass, thus closing a cycle in which energy is achieved without increasing the greenhouse effect.

The electrolyte in low temperature fuel cells can be a strong acid or basic solution, like a concentrated solution of KOH in the so-called AFC (*Alkaline fuel cells*).

In fuel cells, both the anodic and cathodic reactions occur on catalysts (or electrocatalysts) which consist either of metallic sheets, or of highly dispersed metallic nano-particles (usually 2-50 nanometers, 10⁻⁹ m, large), supported on a porous and conductive material (for instance carbon black). Catalysts for fuel cells are generally made up of platinum or platinum-ruthenium alloys, and their purpose consists in speeding up the anodic and cathode reactions, which otherwise would occur too slowly to produce useful currents. The catalysts and the electrolyte are therefore two essential components for the existence and the working of fuel cells.

It is known in the state of art that the more dispersed metal particles are, the better the performances catalysts provide in terms of current density (commonly expressed in mA/cm²) (see Xin et al. Chem. Commun, 2003, 394-395 and references therein). It has been proved that the oxidation of methanol, for example, depends on the microstructure of the catalyst (C. Lamy et al. J. Electroanal. Chem. 1983, 150, 71). Besides, it has been suggested that catalyst particles have got an optimum diameter for the oxidation of any fuel, for example 2 nm for methanol (B. J. Kennedy and A. Hamnet J. Electroanal. Chem. 1990, 283, 271).

Studies of the correlation between the electrochemical activity and the size of the catalyst particles have been carried out for 1.4 nm metallic particles as well, which have been got by means of *magnetron sputtering deposition* (M. Watanabe et al. J. Electroanal. Chem. 1989, 271, 213). Reports about the activity of electrocatalysts in platinum & its alloys-based fuel cells with particles one or less nanometre large are not known yet in literature.

The oxidation reaction of methanol on platinum catalysts is more difficult and more complicated than for hydrogen. At a certain stage of the oxidation process indeed carbon monoxide (CO) is produced, which tends to poison the platinum catalyst and consequently to reduce the efficiency of the cell (see J. Kua and W. A. Goddard III J. Am. Chem. Soc: 1999, 121, 10928). To limit such an undesired effect, catalysts based on platinum-ruthenium or platinum-tin, more resistant to CO, are used. A major flaw of DMFCs is that the electrochemical efficiency of methanol (about 30%) is by far inferior to hydrogen efficiency in PEMFCs (about 60%); furthermore, the theoretical voltage is 1.18 V, but when the density of current is 500 mA/cm², the voltage can decrease below 0.4 V. Therefore, in order to get performances similar to those shown by PEMFCs, it is necessary to increase the platinum charge at the anode, even by ten times, thus raising the total cost of the cell.

Besides, polarization effects are noticeable at the platinum cathode when it comes in contact with the methanol that manages to pass through the membrane (cross-over alcohol).

The platinum loading on the electrodes for DMFC of known art can vary from 5 to 10 mg/cm², while the platinum loading on the electrodes for PEMFCs of known art can vary from 0.12 to 2 mg/cm².

The oxidation of ethanol and of alcohols with a higher number of carbon atoms or of OH functional groups, as in polyalcohols like ethylene glycol, has turned out to be even tougher because of the occurrence of serious overvoltages. The conversion of ethanol and ethylene glycol to CO₂ and electrons require indeed the breaking of carbon-carbon bonds and the concomitant activation of several water molecules. Effective electrocatalysts based on platinum and platinum alloys for "low temperature" fuel cells fuelled with ethanol or ethylene glycol are virtually unknown (vide infra).

Data and general information about fuel cells of the types PEMFC, DFC (included DMFC and DEFC) and AFC, about their working and building technology are available in: celle a combustibile, M. Ronchetti, A. lacobazzi, ENEA, February 2002 (Italy); Handbook for fuel cells, W. Vielstick and A. Lamm, Wiley, Vol. I-III; Wiley, New York, 2003; C. Lamy et al. J. Power Sources 2002, 105, 283-296; C. Lamy et al. J. Appl. Electrochem. 2001, 31, 799-809; M. P. Hogarth and T. R. Ralph Platinum Metals Rev. 2002, 46, 146-164; M. P. Hogarth and T. R. Ralph Platinum Metals, Rev. 2002, 46, 3-14.

The diffusion of PEMFCs, DMFCs and DFCs, as well as any other fuel cell working with platinum is dramatically limited by the scarce natural abundance of this metal, consequently, by its high price (natural reserves amount to just 5000 tonnes, source Johnson Matthey in Platinum Metals Rev. 2004, 48, 34). The world production of mobile phones on its own, in case all the phones were fed with fuel cells, would absorb one third of world platinum extraction (just 165 tons in 2002), while the replacement of car engines with fuel cells stacks would require more than forty times the actual production of platinum (a Mercedes class A fed with reformed hydrogen contains 180 g of platinum in its stack). Because of platinum scarce availability one can correctly suppose that a high increase in the request for platinum would cause prices to go up, until fuel cells would lose their competitiveness over other technologies for the production of power.

A second constraint to the employment of platinum-based catalyst of known art involves PEMFCs too, but mostly direct alcohol fuel cells, called DAFC (*Direct Alcohol Fuel Cell*). As said previously, platinum-based cathodes are sensitive to cross-over alcohols, causing relevant cathode polarizations. In turn, platinum-based anodes easily deactivate themselves in presence of very small quantities (ppm) of carbon monoxide (CO), which is an intermediate product of the alcohols oxidation and is contained in reformed hydrogen too. Furthermore, pure platinum decomposes water (equation 1) at high voltages (between 0.6 and 0.8 V vs. RHE), thus endangering its capability to oxidize adsorbed CO (equation 2) and causing strong anodic overvoltages:

Pt + H₂O → Pt-OH + H⁺ + e⁻ (1)

Pt-OH + (CO)_{ads} → Pt + CO₂ + H⁺ + e⁻ (2)

There are even some problems related to the type of alcohol used. For example, no platinum-based catalyst of known art, even in combination with other metals, enables anodic electrocatalyst for direct ethanol fuel cells (DEFC) in which ethanol is completely oxidized to CO₂; this means that the available specific energy Wₑ of ethanol (8 KWh/Kg) cannot be completely exploited at a temperature at which both proton-exchange and anion-exchange polymeric membranes are stable (< 100 °C). Ethylene glycol makes no exception. Moreover, the active sites of platinum-based anodic catalysts, if in presence of ethanol, are reduced by the formation of a superficial layer of platinum oxide that hinders the adsorption of ethanol (equation 3).

Pt(OC₂H₅) + H₂O → PtO + C₂H₅OH + H⁺ + e⁻ (3)

Some of the drawbacks mentioned above can be worked out with a few tricks, which however are seldom quick and cheap. One may increase the platinum loading up to 10 mg/cm² to both DMFC electrodes, or else devise anodes based on alloys of platinum and other transition metals, like Ru, Co, Ni, Fe, Mo and Sn (see D. Chu and S. Gilmann J. Electrochem. Soc. 1996, 143, 1685). It has been proved that these metals reduce the CO absorption on active catalytic sites, by forming Pt-CO weaker bonds, and besides they prompt the oxidative decomposition of water at lower voltage values (0.2 V vs. RHE for ruthenium) (H. A. Gasteiger et al. J. Phys. Chem. 1994, 98, 617). Anyway, no anodic catalyst based on binary and tertiary alloys of platinum and other metals and able to produce appreciable densities of power (mW/cm²) in "self-breathing" DEFC is on the record. Some tens of mW/cm² have been measured only with anodes based on Pt/Sn (2 mg/cm²) and cathodes based Pt (4 mg/cm²), at temperatures higher than 90 °C and 3 bar of oxygen pressure (C. Lamy et al. J. Power Sources 2002, 105, 283-296; C. Lamy et al. J. Appl. Electrochem. 2001, 31, 799-809). In this case too, however, the oxidation of ethanol at the anode has turned out to be incomplete, i.e. without a complete evolution of CO₂. The same remarks are valid for DAFC fed with ethylene glycol (C. Lamy et al. J. Appl. Electrochem. 2001, 31, 799-809; W. Hauffe and J. Heitbaum Electrochimica Acta 1978, 23, 299).

Experimental evidence concerning adsorbed CO tendency not to be easily oxidized by platinum catalysts and concerning the significant passivation of Pt active sites in DAFCs are reported in: M. Watanabe et al. J. Phys. Chem. B 2000, 104, 1762-1768; M. Watanabe et al. Phys. Chem. Chem. Phys. 2001, 3, 306-314; M. Watanabe et al. Langmuir 1999, 15, 8757-8764; M. Watanabe et al. Chem. Commun. 2003, 828-829; H. A. Gasteiger et al. J. Chem. Phys. 1994, 98, 617-625; S.-M. Park et al. J. Electrochem. Soc. 1995, 142, 40-45. These scientific surveys also point out that the combination of platinum with other metals to form alloys or intermetal aggregates is able to reduce remarkably anodic overvoltages in the DAFCs, making electrodes more tolerant to CO. On one hand, this is achieved thanks to the formation of weaker platinum-CO bonds, on the other hand through a decrease of the water decomposition potential according to equation 1, and therefore by prompting the oxidation process of CO (see above equations 1 and 2).

Several methods to synthesize electrocatalysts based on platinum and platinum alloys are known. A very common method consists in impregnating a conductive support, generally carbonaceous like Vulcan XC-72, with a platinum salt which is then reduced either in liquid phased systems by means of appropriate reductive agents or in gaseous phase systems with hydrogen at high temperature. A similar process is employed to add a second metallic salt. The resultant material undergoes annealing in a reductive environment or in inert gas. Such a process is described in the patent US 6,379,834 B1, Apr. 30, 2003, for a series of anodic electrocatalysts based on Pt/Mo.

Electrochemical methods of preparation of anode and cathode electrocatalysts for fuel cells involve the electrodeposition of one metal at the time, generally platinum, subsequently followed by the electrodeposition of the other. Electrochemical methods of preparation of electrocatalysts based on platinum alloys with other metals are described in the following patents: Pt/Ru/Pd in US 6,498,121 B1 (Dec. 24, 2002); Pt/Ru/Ni in US 6,517,965 B1 (Feb. 11, 2003); Pt-Ru-Pd in US 6,682,837 B2 (Jan. 27, 2004); Pt/Ru/Ni in US 6,723,678 B2 (Apr. 20, 2004).

Other methods for the preparation of anodic and cathode electrocatalysts based on platinum or platinum alloys are even more sophisticated, so much as to be frequently limited to lab research; one of these is the *magnetron sputtering deposition* (M. Watanabe et al. Chem. Commun. 2003, 828-829; M. Watanabe J. Electrochem. Soc. 1999, 146, 3750-3756; Masahiro Watanabe, Japan patent application JP-A-8 066 632, Aug. 27, 1994).

Whatever the method of synthesis is, all known art electrocatalysts for fuel cells anodes and cathodes, and especially for PEMFCs, DFCs and DAFCs based on sole platinum or on binary, tertiary and quaternary combinations of platinum with other metals, contain metallic particles larger than one nanometer, (commonly between 2 and 50 nm), no matter what the preparation method is.

Undoubtedly, the activity of a catalyst, and particularly of a bimetallic or trimetallic catalyst depends upon both electronic and structural factors, which in turn depend upon both the method of synthesis and the nature of the metals combined with platinum. A useful monograph to understand the relationships between structure and reactivity has been written by P. N. Ross "The Science of Electrocatalysis on Bimetallic Surfaces", Vol. 4, J. Lipowski and P. N. Ross Jr., Wiley-Interscience, New York, N. Y. 1997.

In a patent application (Platinum-free electrocatalysts materials, WO 2004/036674) is claimed the use of synthetic resins, obtained by the condensation of a functionalized 1,3-diol, containing nitrogen donor atoms, with phenol or a 3,5-disubstituted phenol and formaldehyde or paraformaldehyde, to coordinate metal salts, none of which containing platinum, and preferentially containing iron, cobalt and/or nickel. Such metal-resin adducts treated with gaseous hydrogen at high temperature or with other chemical reducing agents in fluid systems, or even subjected to pyrolysis under inert atmosphere in at temperatures higher than 500°C, are converted to catalytic materials for both anodes and cathodes for fuel cells of the types PEMFC, AFC, DFC, DMFC, DEFC and in general for DAFC. In this same application, it is claimed that alcohols such as methanol, ethanol and ethylene glycol are completely converted into CO₂ at the anodes.

In Polymer Int. 1992, 29, 103-106 **and** J. Appl. Polym. Sc. 1994, 51, 1679-1682 **it is described the synthesis and characterisation of numerous compounds called copolymeric resins obtained by condensation, in basic or acidic conditions, of 2,4 dinitrophenylhydrazone of resacetophenone or 2-hydroxyacetophenone with formaldehyde; all the described resins are used exclusively as ion exchange resins for the coordination of various transition metals.**

### SUMMARY

The present invention refers to anodic and cathode electrodes catalysts for fuel cells having a low content of platinum, consisting of metal complexes of platinum salts, or alloys thereof, and polymers (already described in WO 2004/036674) obtained by condensation of a 4-{1-[(phenyl-2,4-disubstituted)-hydrazine]-alkyl}-benzene-1;3-diol with a 3,5-disubstituted phenol and formaldehyde or para-formaldehyde in the presence of an acid or basic catalyst in water/alcohol mixtures and at a temperature comprised between 20 - 150°C and having a molecular weight comprised between 1000 and 50000.

### DESCRIPTION OF THE FIGURES

Fig. 1 - represents a cross-section schematic view of a simplified fuel cell operating with the catalyst of the invention.
Fig. 2 - is an histogram showing the size of the particles of a platinum catalyst (loading 1% by weight) in respect of the catalytic system metal/support material (Vulcan XC-72) prepared according to method 1.
Fig. 3 - is an histogram showing the size of the particles of a catalyst based on Pt₅₀-Ru₅₀ (loading 1,2% by weight) in respect of the catalytic system metal/support material (Vulcan XC-72) prepared according to method 2.
Fig. 4 - is an histogram showing the dimensions of the particles of a catalyst based on Pt₉₀-Ni₁₀ (loading 2,5% by weight) in respect of the catalytic system metal/support material (Vucan XC-72) prepared according to method 3.
Fig. 5 - is an histogram showing the dimensions of the particles of a catalyst based on Pt₅₀-Ru₄₀-Co₁₀ (loading 1,5% by weight) in respect of the catalytic system metal/support material (Vulkan XC-72) prepared according to method 2.
Fig. 6 - is an histogram showing the dimensions of the particles of a catalyst based on Pt₉₀-Fe₁₀ (loading 2,1% by weight) in respect of the catalytic system metal/support material (SiO₂) prepared according to method 2.
Fig. 7 - is the polarisation curve of a PEMFC cell (Nafion^{©} - 112, H₂SO₄ 1 N) comprising an anode catalysed with 0.10 mg Pt₅₀-Ru₅₀/cm² (1,5% metal/C) and a cathode catalysed with 0.10 mg Pt/cm² (1.0 %metal/C) at about 60°C with pure H₂ (1 bar) (curve a) or contaminated by 200 ppm CO (curve b).
Fig. 8 - is the polarisation curve of a DMFC cell (Nafion^{©} - 112, H₂SO₄ 1N) comprising an anode catalysed with 0.10 mg Pt₅₀-RU₄₀-Co₁₀/cm² (2% metal/C) and a cathode catalysed with 0.10 mg Pt/cm² (1.0 %metal/C) at about 65°C fuelled with an aqueous solution of MeOH 15% (v:v).
Fig. 9 - is the polarisation curve of a DEFC cell (Selemion AMW, K₂CO₃ 1N) comprising an anode catalysed with 0.15 mg Pt₉₀-Ni₁₀/cm² (2% metal/C) and a cathode catalysed with 0.10 mg Pt₅₀-Co₅₀/cm² (1.2 %metal/C) at about 25°C fuelled with an aqueous solution of EtOH 10% (v:v).

### DETAILED DESCRIPTION OF THE INVENTION

The present invention allows to overcome the above said problems thanks to anode and cathode catalysts for fuel cells having a low content of platinum either alone or in alloys with other metals.

The catalysts according to the invention consists of metal complexes formed by platinum salts or alloys thereof and template polymers (already described in WO 2004/036674) prepared by condensation of a 4-{1-[(phenyl-2,4-disubstituted)-hydrazine]-alkyl}-benzene-1,3-diol with a 3,5-disubstituted phenol and formaldehyde, or para-formaldehyde in the presence of an acid or basic catalysts in water/alcohol mixtures and at a temperature comprised between 20 - 150°C and having a molecular weight comprised between 1000 and 50000.

Preferably the 4-{1-[(phenyl-2,4-disubstituted)-hydrazine]-alkyl}-benzene-1,3-diol is a compound of formula (A) 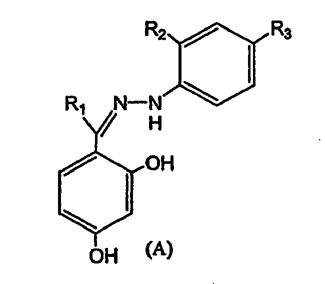 Wherein R₁ is chosen in the group consisting of: H, a C₁₋₁₀ hydrocarbon radical, possibly halogenated,
R₂ and R₃ independently from each other represent an electron-attractive group chosen in the group consisting of: H, halogen, acyl, ester, carboxylic acid, formyl, nitrile, sulphonic acid, aryl groups or linear or branched alkyl having 1 - 15 carbon atoms, possibly functionalised with halogens or joined to each other in order to form one or more cycles condensed with the phenyl ring, and nitro groups; and
the 3,5 disubstituted phenol is a compound of formula (B) 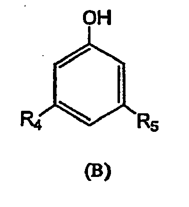 wherein R₄ and R₅ independently from each other represent an electro-donating group chosen among H, OH, ether, amine, aryl and linear or branched alkyl groups having 1-15 carbon atoms.

The above said polymers can be represented by the formula (C) 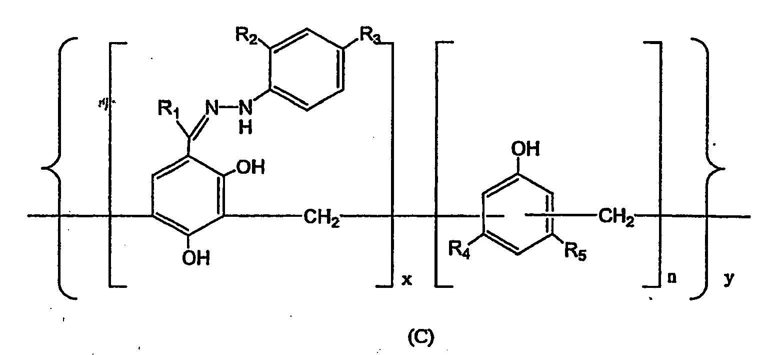 wherein y is comprised between 2 and 120, x is comprised between 1 and 2, n is comprised between 1 and 3 and R₁, R₂, R₃, R₄ and R₅ are as above defined.

Platinum metal salts or alloys thereof, according to the invention, means salts chosen in the group of carboxylates, halogens, alcoholates, acetylacetonates, formates, oxalates, malonates, and analogous organic salts and their mixtures or carbonate oxides or bicarbonates and their mixtures.

According to the invention the metals to be used in combination with platinum are preferably chosen in the group consisting of : Fe, Ru, Co, Rh, Ir, Ni, Pd, Mo, Sn, La, V, Mn.

With fuel cells, according to the invention it is intended the fuel cells known as: PEMFC, DAFC, DFC, AFC, the latest containing also another liquid electrolyte as for example a concentrated solution of KOH. Preferably the catalysts according to the invention, consisting of metal particles having high dispersion and dimensions of 2 nanometers (10⁻⁹ m) or less, are deposited on various inorganic and conductive support materials, as amorphous or graphite carbons having high porosity, but also non-conductive as porous metal oxides, as for example silica, alumina, ceria and magnesia if they have to be used for purposes different then their use in fuel cells. Before the deposition of the metals, the support materials are submitted to purification and activated as described in the related state of the art

For the preparation of the catalysts of the invention to make anodes for fuel cells, the method 1, 2 and 3 can be equally used

### Method 1:

A platinum salt or a compound containing platinum, preferentially hexachloroplatinic acid (H₂PtCl₆), dissolved in water is added to an aqueous suspension of a templating polymer of known art, denoted from now on as POLIMER (WO 2004/036674). The solid product which is formed is filtered off, washed with water and dried in the air. Once dry, this solid is added to a suspension of a porous and conductive carbonaceous material, either amorphous or graphitic in nature, for instance Vulcan XC-72 or active carbon RDBA, just to say but a few, in acetone or other organic solvents. The *resultant product* is treated with a reducing agent of the state of the art, for instance NaBH₄ or NH₂NH₂), filtered off, washed with water and dried.

Alternatively, the *resultant product* is isolated by solvent evaporation under reduced pressure and then treated with a stream of hydrogen at a temperature between 300 and 800 °C.

For different purposes other than the use in fuel cells, the product obtained by the reaction of the POLIMER with a platinum salt or a compound containing platinum is treated with a suspension of a porous and activated metal oxide, such as silica, alumina, ceria and magnesia in acetone or in other organic solvents. After stirring for some hours, the resultant material is filtered off, washed with water and dried; then, the metal complexed by the POLIMER and supported on the metal oxide is reduced with any of the methods described above.

### Method 2:

A platinum salt or a compound containing platinum, preferentially hexachloroplatinic acid (H₂PtCl₆), dissolved in water and a salt or a compound of another metal of the Periodic Table of the Elements, preferentially Fe, Ru, Co, Rh, Ir, Ni, Pd, Mo, Sn, La, V, Mn dissolved in water, are added to an aqueous suspension of the POLIMER. The solid product which is formed after stirring for some hours is filtered off, washed with water and dried in the air. Once dry, this solid is added to a suspension of a porous and conductive carbonaceous material, either amorphous or graphitic in nature, for instance Vulcan XC-72 or active carbon RDBA, just to say but a few, in acetone or other organic solvents. The *resultant product* is treated with a reducing agent of the state of the art, for instance NaBH₄ or NH₂NH₂), filtered off, washed with water and dried.

Alternatively, the product obtained by treatment of the POLIMER containing Pt and another metal, preferentially among those cited above, with the carbonaceous material is isolated by solvent evaporation under reduced pressure and then treated with a stream of hydrogen at a temperature between 300 and 800 °C.

For different purposes other than the use in fuel cells, the product obtained by reaction of the POLIMER with a platinum salt or a compound containing platinum and a metal salt or a compound containing a metal of the Periodic Table of the Elements, preferentially among those cited above, is treated with a suspension of a porous and activated metal oxide, such as silica, alumina, ceria and magnesia in acetone or in other organic solvents. After stirring for some hours, the resultant material is filtered off, washed with water and dried; then, the metal complexed by the POLIMER and supported on the metal oxide is reduced with any of the methods described above.

### Method 3:

A platinum salt or a compound containing platinum, preferentially hexachloroplatinic acid (H₂PtCl₆), dissolved in water and a salt or a compound of another metal of the Periodic Table of the Elements dissolved in water and a third salt or compound of another metal dissolved in water (preferentially the two metals are in the group constituted by Fe, Ru, Co, Rh, Ir, Ni, Pd, Mo, Sn, La, V, Mn) are added to an aqueous suspension of the POLIMER. The solid product which is formed after stirring for some hours is filtered off, washed with water and dried in the air.

This solid is added to a suspension of a porous and conductive carbonaceous material, either amorphous or graphitic in nature, for instance Vulcan XC-72 or active carbon RDBA, just to say but a few, in acetone or other organic solvents.

The *resultant product* is treated in situ with a reducing agent of the state of the art, for instance NaBH₄ or NH₂NH₂). The resultant product is filtered and dried or is isolated eliminating the solvent under reduced pressure, then treated with an hydrogen stream in an oven at a temperature between 300 and 800°C.

For different purposes other than the use in fuel cells, the product obtained by the reaction of the POLIMER with a platinum salt or a compound containing platinum and two or more metal salts or compounds containing a metal of the Periodic Table of the Elements, preferentially among the group constituted by Fe, Ru, Co, Rh, Ir, Ni, Pd, Mo, Sn, La, V, Mn is treated with a suspension of a porous and activated metal oxide, such as silica, alumina, magnesia or ceria, in acetone or in other organic solvents. After stirring for some hours, the resultant material is filtered off, washed with water and dried; then, the metals complexed by the POLIMER and supported on the metal oxide are reduced with any of the methods described above.

Proceeding according to the above said Methods 1 - 3 respectively the following catalysts were prepared:
a platinum-based catalyst in which the platinum content varies between 0.1 and 50% in weight with respect to the support,
a platinum-iron-based catalyst in which the overall metal content varies between 0.1 and 50% in weight with respect to the support and the atomic ratio between platinum and iron varies between 99:1 and 1:99,
a platinum-ruthenium-based catalyst in which the overall metal content varies between 0.1 and 50% in weight with respect to the support and the atomic ratio between platinum and ruthenium varies between 99:1 and 1:99,
a platinum-cobalt-based catalyst in which the overall metal content varies between 0.1 and 50% in weight with respect to the support and the atomic ratio between platinum and cobalt varies between 99:1 and 1:99,
a platinum-rhodium-based catalyst according to claims 1 - 5 in which the overall metal content varies between 0.1 and 50% in weight with respect to the support and the atomic ratio between platinum and rhodium varies between 99;1 and 1:99,
a platinum-iridium-based catalyst in which the overall metal content varies between 0.1 and 50% in weight with respect to the support and the atomic ratio between platinum and iridium varies between 99:1 and 1:99,
a platinum-nickel-based catalyst in which the overall metal content varies between 0.1 and 50% in weight with respect to the support and the atomic ratio between platinum and nickel varies between 99:1 and 1:99,
a platinum-palladium-based catalyst in which the overall metal content varies between 0.1 and 50% in weight with respect to the support and the atomic ratio between platinum and palladium varies between 99:1 and 1:99,
a platinum-tin-based catalyst in which the overall metal content varies between 0.1 and 50% in weight with respect to the support and the atomic ratio between platinum and tin varies between 99:1 and 1:99,
a platinum-molybdenum-based catalyst in which the overall metal content varies between 0.1 and 50% in weight with respect to the support and the atomic ratio between platinum and molybdenum varies between 99:1 and 1:99,
a catalyst based on platinum and any other metal of the Periodic Table of the Elements, in which the total metal content varies between 0.1 and 50% in weight with respect to the support and the atomic ratio between platinum and the selected metal varies between 99:1 and 1:99,
a catalyst according to claims 1-5 based on platinum in conjunction with two or more metals in which the total metal content varies between 0.1 and 50% in weight with respect to the support and the atomic ratio of the metals varies in every possible combination.

### Anode preparation:

### Method (a)

The catalysts supported on conductive carbonaceous materials prepared with the methods 1, 2 and 3 are suspended into a water/ethanol mixture. To this suspension, vigorously stirred and heated at a temperature between 60 and 80 °C, is added PTFE (polytetrafluorethylene) and the resultant flocculous product is separated and then spread onto appropriate conductive supports such as carbon paper, steel nets or sintered nickel. The resultant electrode is heated to 350 °C in a flow of an inert gas (Ar, N₂).

### Method (b)

The products obtained by the reaction of the metal salts or metal compounds with the POLIMER are dissolved in a polar organic solvent such as acetone or dimethylformamide. A chosen aliquot of the resultant solution is deposited onto discs made with highly porous and conductive materials such as silver, nickel, ceramic powder (Wc, Moc, for instance). These discs are dried and treated with a reducing agent of the state of the art (NaBH₄ orNH₂NH₂ for instance) or subjected to a flow of hydrogen gas in a reactor maintained at a temperature between 300 and 800 °C.

For the preparation of the catalysts of the invention to make cathodes for fuel cells, the hereinafter described methods 4 and 5 can be equally used.

### Method 4:

A platinum salt or a compound containing platinum, preferentially hexachloroplatinic acid (H₂PtCl₆), dissolved in water is added to an aqueous suspension of the POLIMER. The solid product that is formed after stirring for 1 h is filtered off, washed with water and dried.

This solid is added to a suspension, in acetone or dimethylformamide or other polar organic solvent, of a conductive and porous carbonaceous material such as Vulcan XC-72 or active carbon RDBA (just to say but a few). After stirring for some hours, the solvent is removed under reduced pressure and the solid residue is heated to a temperature between 500 and 900°C under an atmosphere of inert gas (N₂ or Ar).

### Method 5:

A platinum salt, or a compound containing platinum, preferentially hexachloroplatinic acid (H₂PtCl₆), dissolved in water and a salt or a compound of a metal of the Periodic Table of the Elements, preferentially nickel, cobalt, molybdenum, lanthanum, vanadium, manganese, dissolved in water are added to an aqueous suspension containing the POLIMER. The solid product which is formed after some hours is filtered off, washed and dried. The resultant solid product is added to an acetone or dimethylformamide suspension of a porous and conductive material such as Vulcan XC-72 or active carbon RDBA (just to say but a few). After stirring for some hours, the solvent is removed under reduced pressure and the solid residue is heated in an oven to a temperature between 500 and 900°C under an atmosphere of an inert gas (N₂, Ar).

### Cathode preparation:

The catalytic material previously obtained with methods 4 and 5 is suspended in a hot mixture of water and ethanol. To this suspension is added PTFE (polytetrafluoroethylene) and the flocculous product that separates is spread and then pressed at room temperature onto appropriate conductive support materials such as carbon paper or stainless steel grids, just to say but a few, made waterproof by methods known in the state of the art. Then, the catalysed support is heated to a temperature between 300 and 350°C under an atmosphere of inert gas (N₂, Ar).

The metal content and composition in the catalysts has been determined by *Inductively Coupled Plasma Atomic Emission Spectroscopy* (ICP-AES) and checked by *Energy Dispersive X-ray Spectrometry* (EDXS).

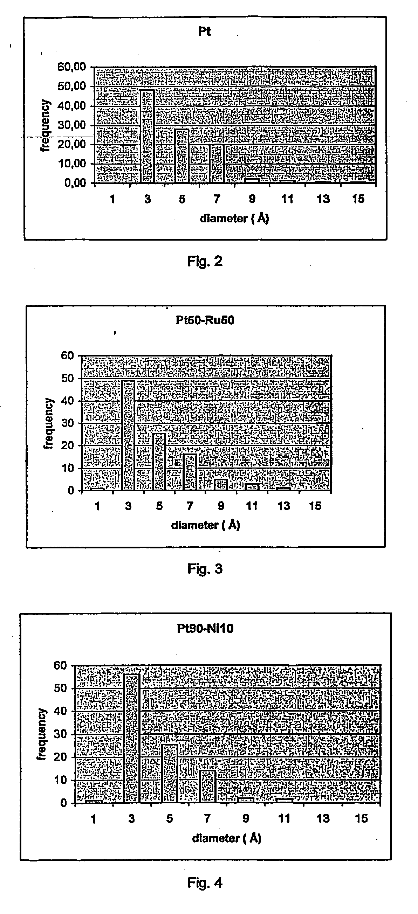

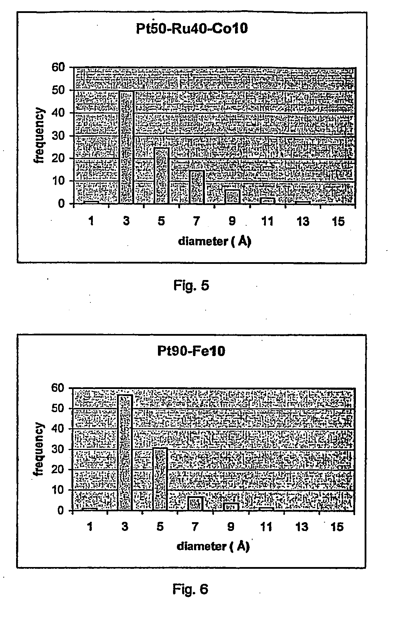

The histogram reported in Figures 2 - 6, obtained by High Resolution Transmission Electron Microscopy (HR-TEM), show the particles dimensions of a catalyst of the invention containing platinum alone or various combination platinum/metal as reported in detail above in the description of the figures.

Homo- or poly-metallic particles having dimensions mainly comprised between 3-4 A are not known in the state of the art for catalysts employed in fuel cells.

The metal particles of the catalysts of the invention are formed by a few atoms, not exceeding a dozen, originating structures featured by an extraordinary anodic and cathodic activity in various kinds of fuel cells containing solid electrolytes constituted by cation-exchange (for instance *Nafion*^{®}) and anion-exchange (for instance *Flemion*^{®} by Asahi Glass) polymeric membranes.

Experiments realized with Diffuse Reflectance Infrared Spectroscopy (DRIFT) have shown that the catalysts of the invention, whatever the metal or the combination of metals, do not form strong chemical bonds to gaseous CO.

The anodes made with the catalysts of the invention can convert, into electrons and protons, gaseous hydrogen (pure or reformed), metal borohydrides, hydrazine, hydroxylamine, and can convert, into electrons and CO₂, a large variety of oxygenated compounds containing hydrogen atoms such as methanol, ethanol, ethylene glycol, acetaldehyde, formic acid, glucose, sorbitol, just to say but a few; at ambient temperature and pressure. In general, however, the catalysts of the invention and the electrodes made with them can be used to catalyse the oxidation of any fuel containing hydrogen, even saturated hydrocarbons such as methane (natural gas), ethane, propane and butane and fossil fuels such as gasoline and kerosene.

The cathodes made with the catalysts of the invention convert pure oxygen or oxygen from air into water (when the electrolyte in the fuel cell is a proton exchange membrane) or into hydroxide ions (OH⁻) (when the electrolyte in the fuel cell is an anion exchange membrane).

An anode of the invention, in conjunction with a cathode of the invention or even with a cathode for fuel cell of the known state of the art, and a cathode of the invention, in conjunction with an anode of the invention or even with an anode of the known state of the art, can be employed to assembly a fuel cell such as that illustrated in Figure 1.

The performances of monoplanar fuel cells constituted by electrodes of the invention have been estimated by means of a potentiostat in various experimental conditions.

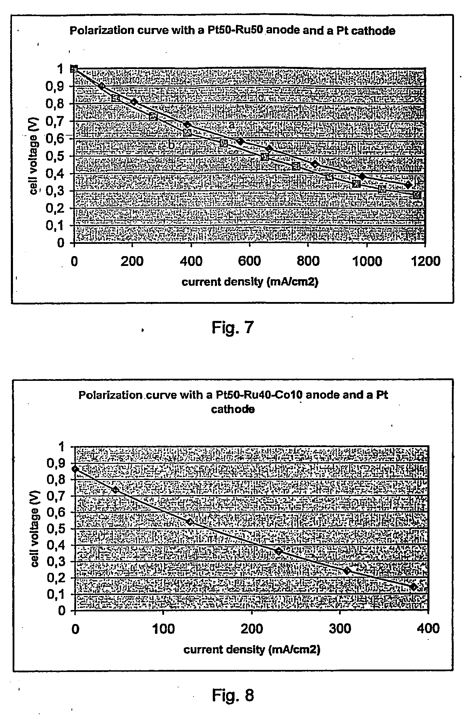

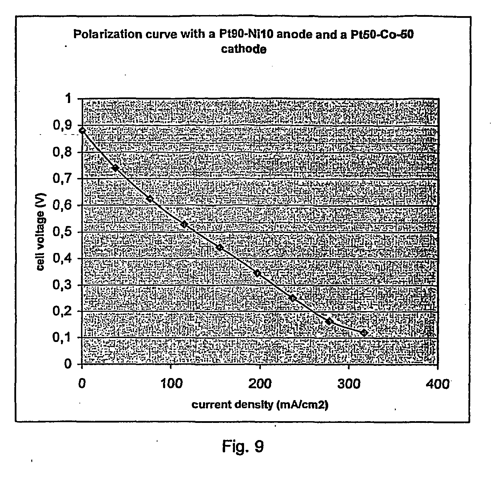

Figures 7-9 show some examples of polarization curves recorded for different combinations of anodes and cathodes.

According to a particular embodiment the present invention refers to catalyzed anode and cathode electrodes, with platinum alone or in combination with other metals as for example Fe, Ru, Co, Rh, lr, Ni, Pd, Mo, Sn, La, V, Mn, to be used in PEMFC fuel cells fuelled by hydrogen, which, although maintaining the same characteristics of the known catalyzed electrodes, employ platinum in quantity not higher then 0.20 mg/cm², preferably 0.06 mg/cm² or lower.

According to a further embodiment the present invention refers to anodes for DAFC fuel cells containing platinum alone or in combination with other metals as for example Fe, Ru, Co, Rh, Ir, Ni, Pd, Mo, Sn, La, V, Mn and allowing the use of alcoholic fuel as methanol , ethanol, ethylene glycol or sugars as glucose or sorbitol, in aqueous concentration up to 50% in weight. Such fuel cells contain a quantity of platinum not higher then 0.30 mg/cm² preferably 0.20 mg/cm² or lower and, in particular they allow to use the whole specific energy of any alcoholic fuel converting it totally into CO₂.

According to a still further embodiment the invention refers to anodes for DFC fuel cells containing platinum or combinations of platinum with other metals, for example Fe, Ru, Co, Rh, Ir, Ni, Pd, Mo, Sn, La, V, Mn and allowing the use of fuels containing combined hydrogen, for example aldehydes, acids, hydrazine, metallic borohydrides, in aqueous or alcoholic concentrations up to 50% in weight. Such fuel cells contain a quantity of platinum not higher then 0.30 mg/cm² preferably 0.20 mg/cm² or lower.

According to a still further embodiment the invention refers to anodes for DAFC and AFC fuel cells containing platinum or combinations of platinum with other metals, for example Fe, Ru, Co, Rh, lr, Ni, Pd, Mo, Sn, La, V, Mn and allowing the use of alcoholic fuels, for example methanol, ethanol, ethylene glycol, or sugars as glucose and sorbitol, in aqueous concentrations up to 50% in weight. Such fuel cells contain a quantity of platinum not higher then 0.30 mg/cm² preferably 0.20 mg/cm² or lower.

In order to better understand the invention some anodes and cathodes according to the invention are described more precisely in the following examples.

### Example 1

### PREPARATION OF PLATINUM ANODIC CATALYST

To a suspension of 1 g of the known polymer polimer in 100 ml of water is added 0.2 g of hexachloroplatinic acid (H₂PtCl₆). The pH of the resulting mixture is fixed at 9 by addition of 50 mL of NaOH 1M and the mixture is vigorously stirred at room temperature for 6 h. A dark red precipitate is formed which is filtered off, washed several times with distilled water and dried under reduced pressure at 70 °C until constant weight. Yield= 0.8 g. Pt content = 6 wt.% (ICP-AES).

To a suspension of 0.5 g of this product in 100 mL of acetone (finely dispersed by sonication for 30 min.) is added 5 g of Vulcan XC-72R (previously activated and purified by reflux in 100 mL of HNO₃ 1 N, filtered off, washed with water several times and heated at 800 °C for 2 h in a stream of an inert gas). This suspension is vigorously stirred at room temperature for 4 h. Then it is cooled to 0 °C, and a 0.7 g of NaBH₄ are slowly added portion-wise. The mixture is allowed to reach room temperature and after 2 h the solid residue is filtered off, washed with water (3 x 50 mL) and dried under reduced pressure at 70 °C until constant weight. Pt content = 0.55 wt.% (ICP-AES).

Alternatively, the reduction of the metal can be achieved using a stream of hydrogen gas. In this case, 5 g of the mixture containing the POLlMER-Pt and Vulcan (1:10 w/w), is introduced into quartz tubular reactor and then heated in a stream of hydrogen at 360 °C for 2 h. Pt content= 0.55 wt.% (ICP-AES).

### Example 2

### PREPARATION OF PLATINUM-RUTHENIUM ANODIC CATALYST

To a suspension of 1 g of POLIMER in 100 mL of water is added 0.2 g of hexachloroplatinic acid (H₂PtCl₆) dissolved in 20 mL of water and 0.31 g of ruthenium trichloride trihydrate (RuCl₃·3H₂O) dissolved in 20 mL of water. The pH of the resulting mixture is fixed at 9 by adding 50 mL of NaOH 1 M and the mixture is vigorously stirred at room temperature for 6 h. A dark brown product is formed, which is filtered off, washed several times with distilled water and dried under reduced pressure at 70 °C until constant weight. Yield 0.9 g. Pt content = 6 wt.%, Ru content = 7 wt.% (ICP-AES).

To a suspension of 0.5 g of the previously obtained product in 100 mL of acetone (finely dispersed by sonication for 30 min.) is added 5 g Vulcan XC-72R (previously activated and purified by reflux in 100 mL of HNO₃ 1 N, filtered off, washed with water several times and heated at 800 °C for 2 h in a stream of an inert gas). To this suspension vigorously stirred at room temperature for 4 h and then cooled to 0 °C is added portion-wise 1.5 g of NaBH₄. The resulting mixture is allowed to reach room temperature for 2 h. Afterwards, the solid residue is filtered off, washed with water (3 x 50 mL) and dried under reduced pressure at 70 °C until constant weight. Pt content = 0.55 wt.%; Ru content = 0.66 wt.% (ICP-AES).

Alternatively, the reduction of the metal can be achieved using a stream of hydrogen gas (1 bar). In this case, 5 g of the mixture containing the POLIMER-Pt-Ru and Vulcan (1:10 w/w), is introduced into quartz tubular reactor and then heated in a stream of hydrogen at 360 °C for 2 h. Pt content= 0.55 wt.%; Ru content = 0.66 wt.% (ICP-AES). Atomic ratio (%) = Pt₄₅Ru₅₅.

### Example 3

### PREPARATION OF PLATINUM-RUTHENIUM-NICKELANODIC CATALYST

To a suspension of 1 g of POLIMER in 100 mL of water is added 0.2 g of hexachloroplatinic acid (H₂PtCl₆) dissolved in 20 mL of water and 0.31 g of ruthenium trichloride trihydrate (RuCl₃·3H₂O) dissolved in 20 mL of water, and 0.06 g of nickel acetate tetrahydrate. [Ni(CH₃CO₂)₂·4H₂O] dissolved in 20 mL of water.

The pH of the resulting mixture is fixed at 9 by adding 50 mL of NaOH 1M and the mixture is vigorously stirred at room temperature for 6 h. A dark red product is formed, which is filtered off, washed several times with distilled water and dried under reduced pressure at 70 °C until constant weight. Yield 0.9 g. Pt content = 6 wt.%, Ru content = 7 wt.%, Ni content 1.2 wt % (ICP-AES).

To a suspension of 0.5 g of the previously obtained product in 100 mL of acetone (finely dispersed by sonication for 30 min.) is added 5 g Vulcan XC-72R (previously activated and purified by reflux in 100 mL of HNO₃ 1N, filtered off, washed with water several times and heated at 800 °C for 2 h in a stream of an inert gas). To this suspension vigorously stirred at room temperature for 4 h and then cooled to 0 °C is added portion-wise 1.5 g of NaBH₄. The resulting mixture is allowed to reach room temperature for 2 h. Afterwards, the solid residue is filtered off, washed with water (3 x 50 mL) and dried under reduced pressure at 70 °C until constant weight. Pt content = 0.55 = wt.% , Ru content= 0.66 wt.%, Ni content =0.1 wt% (ICP-AES).

Alternatively, the reduction of the metal can be achieved using a stream of hydrogen gas (1 bar). In this case, 5 g of the mixture containing the POLIMER-Pt-Ru-Ni and Vulcan (1:10 w/w), is introduced into quartz tubular reactor and then heated in a stream of hydrogen at 360 °C for 2 h. Pt content= 0.55 wt.%; Ru content = Ru = 0.66 wt.%, Ni content = 0.1 wt.% (ICP-AES). Atomic ratio (%) = Pt₄₁Ru₅₀Ni₉.

### Example 4

### PREPARATION OF PLATINUM-BASED CATHODIC CATALYST

To a suspension of 2 g of the POLIMER in 200 mL of water is added 0.4 g of hexachloroplatinic acid (H₂PtCl₆). The pH of the resulting mixture is fixed at 9 by addition of 100 mL of NaOH 1M and the mixture is vigorously stirred at room temperature for 10 h. A dark red precipitate is formed which is filtered off, washed several times with distilled water and dried under reduced pressure at 70 °C until constant weight Yield= 1.8 g. Pt content = 6 wt.% (ICP-AES).

To a suspension of 0.5 g of the previously obtained product in 100 mL of acetone (finely dispersed by sonication for 30 min.) is added 5 g Vulcan XC-72R (previously activated and purified by reflux in 100 mL of HNO₃ 1N, filtered off, washed with water several times and heated at 800 °C for 2 h in a stream of an inert gas). This suspension is vigorously stirred at room temperature for 3 h and then the solvent is evaporated under reduced pressure. The solid residue is introduced into a quartz reactor and heated at 600 °C in a stream of nitrogen for 2 h. Pt content =0.55 wt % (ICP-AES).

### Example 5

### PREPARATION OF PLATINUM-NICKEL CATHODIC CATALYST

To a suspension of 2 g of POLIMER in 200 mL of water is added 0.4 g of hexachloroplatinic acid (H₂PtCl₆) dissolved in 30 mL of water and 0.1 g of nickel acetate tetrahydrate [Ni(CH₃CO₂)₂·4H₂O] dissolved in 20 mL of water. The pH of the resulting mixture is fixed at 9 by adding 100 mL of NaOH 1 M and the mixture is vigorously stirred at room temperature for 10 h. A dark red product is formed, which is filtered off, washed several times with distilled water and dried under reduced pressure at 70 °C until constant weight. Yield 1.8 g. Pt content = 6 wt.%, Ni content = 0.6 wt.% (ICP-AES).

To a suspension of 0.5 g of the previously obtained product in 100 mL of acetone (finely dispersed by sonication for 30 min.) is added 5 g Vulcan XC-72R (previously activated and purified by reflux in 100 mL of HNO₃ 1N, filtered off, washed with water several times and heated at 800 °C for 2 h in a stream of an inert gas). This suspension is vigorously stirred at room temperature for 3 h and then the solvent is evaporated under reduced pressure. The solid residue is introduced into a quartz reactor and heated at 600 °C in a stream of nitrogen for 2 h. Pt content =0.55 wt %, Ni content = 0.06 wt.% (ACP-AES). Atomic ratio (%) = Pt₉₀Ni₁₀.

### Example 6

### PREPARATION OF PLATINUM-COBALT CATHODIC CATALYST

To a suspension of 2 g of POLIMER in 200 mL of water is added 0.4 g of hexachloroplatinic acid (H₂PtCl₆) dissolved in 30 mL of water and 0.1 g of cobalt acetate tetrahydrate [Co(CH₃CO₂)₂·4H₂O] dissolved in 20 mL of water. The pH of the resulting mixture is fixed at 9 by adding 100 mL of NaOH 1 M and the mixture is vigorously stirred at room temperature for 10 h. A dark red product is formed, which is filtered off, washed several times with distilled water and dried under reduced pressure at 70 °C until constant weight. Yield 1.8 g. Pt content = 6 wt.%, Co content = 0.7 wt.% (ICP-AES).

To a suspension of 0.5 g of the previously obtained product in 100 mL of acetone (finely dispersed by sonication for 30 min.) is added 5 g Vulcan XC-72R (previously activated and purified by reflux in 100 mL of HNO₃ 1N, filtered off, washed with water several times and heated at 800 °C for 2 h in a stream of an inert gas).' This suspension is vigorously stirred at room temperature for 3 h and then the solvent is evaporated under reduced pressure. The solid residue is introduced into a quartz reactor and heated at 600 °C in a stream of nitrogen for 2 h. Pt content =0.55 wt %, Co content = 0.07 wt.% (ACP-AES). Atomic ratio (%) = Pt₈₉Co₁₁.

### Example 7

### PREPARATION OF AN ANODE FOR A FUEL CELL

10 g of a compound obtained with the procedure described in examples 1, 2 and 3 is suspended in 100 mL of a water/ethanol mixture (1:1, v:v). To this suspension, vigorously stirred, is added 3.5 g of PTFE (polytetrafluroethylene) dispersed in water (60 wt %). After 20 min., a flocculous product (FC) is formed which is separated by decantation.

In alternative to Vulcan, all the conductive carbonaceous materials of the state of the art can be used, such as active carbon RDBA, R-5000, NSN-III or graphite Keiten black, Raven, just to say but a few.

Method (a): 200 mg of the product FC are uniformly spread on a carbon paper disc (Teflon^{®}-treated carbon paper, Fuel Cell Scientific) which is then pressed at 80 Kg/cm². The electrode so formed is sintered by heating in an oven at a 350 °C in a stream of inert gas (N₂ or Ar) for some minutes.

Method (b): 200 mg of the product FC are uniformly spread on a stainless steel grid which is then pressed at 100 Kg/cm². The electrode so formed is sintered by heating in an oven at a 350 °C in a stream of inert gas (N₂ or Ar) for some minutes.

Method (c): 0.5 mL of a suspension in acetone (50 mL) of 200 mg of the POLIMER containing the metal compounds described in examples 1, 2 and 3, before they are reduced with the methods describe, are deposited on various supports differing for the shape and dimensions of a conductive material, for instance silver or nickel powders pressed and sintered. The supports containing the catalyst are then immersed into an aqueous solution (100 mL) of 1 g of NaBH₄ for 10 min. at room temperature.

The reduction of the metal salts can also be achieved by introducing the supports impregnated with the metal(s)-containing POLIMER into a quartz reactor and then heated in a flow of hydrogen gas (1 bar) at 365 °C for 2 h. Other conductive substrates can be powdered ceramic materials such as Wc, Moc, etc..

### Example 8

### PREPARATION OF A CATHODE FOR A FUEL CELL

10 g of the compound obtained with the methods described in examples 4, 5 and 6 is suspended in 100 mL of a 1:1 (v/v) water/ethanol mixture. To this suspension, vigorously stirred, is added 3,5 g of PTFE (polytetrafluoroethylene) dispersed in water (60 wt.%). After 20 min. a flocculous product (CF) is which is separated by decantation. In the place of Vulcan, active carbon RDBA, R-5000, NSN-III, or graphite Keiten black, Raven and other materials may be used as conductive support.

Method (a): 100 mg of CF are uniformly spread onto a stainless-steel net which is then pressed at 100 Kg/cm². The electrode so formed is sintered by heating in an oven at 350 °C under a stream of an inert gas (N₂ or Ar) for some min.

Method (b): 0.5 mL of a suspension of 200 mg of the POLIMER containing the metals described in examples 4, 5 and 6, in 50 mL of acetone is deposited on a support obtained by pressing conductive metals such as powdered Silver or nickel. The support is heated at 500 °C in a stream of an inert gas (N₂ or Ar) for some minutes. Other conductive substrates may be powdered ceramic materials such as Wc, Moc, just to say but a few.

Method (c): This method can involve the waterproof supports known in the state of the art. 0.5 mL of an acetone suspension (50 mL) of 200 mg of the POLIMER containing the metals described in the examples 4, 5 and 6 is suspended in water (50 mL) together with a powder of a porous and conductive material (3g) and in the presence of 2 g of PTFE or of high density polyethylene. The solvent is evaporated under reduced pressure and the solid residue is pressed at 100 Kg to give thin plates or discs with various dimensions. These thin plates or discs are heated at 150 °C under an inert gas (N₂ or Ar) for some minutes.

The invention, obviously refers also to an electrode for fuel cells consisting of a catalyst prepared as above described in particular to an electrochemical fuel cell for the production of electrical power comprising electrodes as above described and a proton exchange membrane or an anion exchange membrane.

Moreover, the invention refers also to an electrochemical fuel cell for the production of electrical power comprising a catalyzed anode as above described and a known cathode for the reduction of oxygen in a fuel cell or a catalysed cathode as above described and a known anode for the oxydation of hydrogen in a fuel cell. This fuel cell possibly contains a proton or an anion exchange membrane and a liquid alkaline or acid electrolyte, wherein the fuel is hydrogen gas, reformed hydrogen gas; alcohols preferably methanol, ethanol, ethylene glycol; hydrazine and hydroxylamine; alkali metal borohydrides with various metal and non-metal cations; aldehydes; acids; hydrocarbons such as methane (natural gas), ethane, propane and butane; fossil fuels such as gasoline and kerosene.

## Claims

1. Anode and cathode catalysts for fuel cells having a low content in platinum, obtained by treatment with a reducing agent or hydrogen and/or pyrolysis of metal complexes formed by salts of platinum, alone or in combination with other metals, and polymers obtained by condensation of a 4-{1-[(phenyl-2,4-disubstituted)-hydrazine]-alkyl}-benzene-1,3-diol with a 3,5-disubstituted phenol and formaldehyde or para-formaldehyde in the presence of an acid or basic catalyst in water/alcohol mixtures and at a temperature comprised between 20 - 150°C and having a molecular weight comprised between 1000 and 50000.

2. Catalysts according to claim 1 wherein the 4-{1-[(phenyl -2,4-disubstituted)-hydrazine]-alkyl}-benzene-1,3-diol is a compound of formula (A) 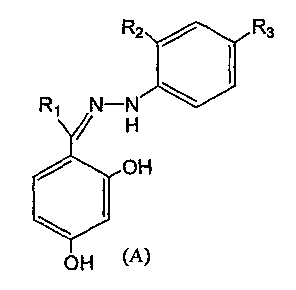 wherein R₁ is chosen in the group consisting of: H, hydrocarbon radical having 1 - 10 carbon atoms, possibly halogenated;
R₂ and R₃ independently from each other represent an electron-attractive group chosen in the group consisting of: H, halogen, acyl, ester, carboxylic acid, formyl, nitrile, sulphonic acid, aryl groups or linear or branched alkyl having 1 - 15 carbon atoms, possibly functionalised with halogens or joined to each other in order to form one or more cycles condensed with the phenyl ring, and nitro groups;
and
the 3,5 disubstituted phenol is a compound of formula (B) 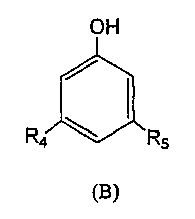 wherein R₄ and R₅ independently from each other represent an electro-donating group chosen among H, OH, ether, amine, aryl and linear or branched alkyl groups having 1 - 15 carbon atoms.

3. Catalysts according to Claims 1 and 2 wherein said polymers are represented by formula (C) 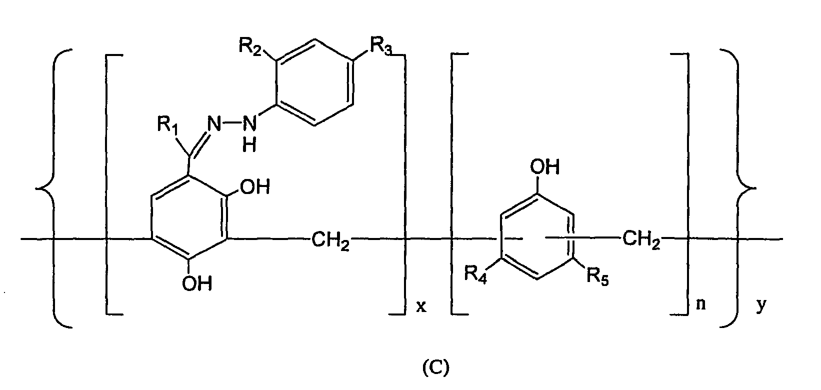 wherein y is comprised between 2 and 120, x is comprised between 1 and 2, n is comprised between 1 and 3 and R₁, R₂, R₃, R₄ and R₅ are as defined in Claim 2.

4. Catalysts according to Claims 1 - 3 wherein the metals in combination with platinum are chosen in the group consisting of: Fe, Ru, Co, Rh, Ir, Ni, Pd, Mo, Sn, La, V, Mn.

5. Catalysts according to claims 1 - 4 wherein said salts are chosen in the group consisting of: carboxylates, halogens, alcoholates, acetylacetonates, formates, oxalates, malonates, and analogous organic salts and their mixtures or carbonate oxides or bicarbonates and their mixtures.

6. A process for the preparation of a catalyst according to Claims 1 - 5 wherein:
- a platinum salt or a platinum compound is firstly complexed by a polymer as defined in Claims 1 and 3;
- the resultant complex polymer-Pt is supported onto conductive and porous carbonaceous materials, and finally the resulting product is:
- treated in the solid state with a reducing agent, filtered and washed; or
- the resultant complex is isolated by solvent evaporation and treated with a stream of hydrogen at a temperature between 300 - 800°C or heated in an atmosphere of an inert gas at 500 - 900 °C.

7. A process for the preparation of a catalyst according to Claims 1 - 5 wherein:
- a mixture constituted by a platinum salt or a platinum compound and one other metal salt is firstly complexed by the polymer as defined in claims 1 and 3;
- supported onto conductive and porous carbonaceous materials known in the state of the art, and finally the resultant product is:
- treated in the solid state with a reducing agent, filtered and washed; or
- the resultant complex is isolated by solvent evaporation and treated with a stream of hydrogen at a temperature between 300 - 800°C or heated in an atmosphere of an inert gas at 500 - 900 °C.

8. A process for the preparation of a catalyst according to Claims 1 - 5 wherein:
- a mixture constituted by a platinum salt or a platinum compound and two other salts is firstly complexed by the polymer as defined in claims 1 and 3;
- the resultant product, is supported onto conductive and porous carbonaceous materials known in the state of the art, and finally the resultant product is:
- treated in the solid state with a reducing agent, filtered and washed; or
- the resultant complex is isolated by solvent evaporation and treated with a stream of hydrogen at a temperature between 300 - 800°C or heated in an atmosphere of an inert gas at 500 - 900 °C.

9. Process for the preparation of a catalyst according to claims 6-8 wherein instead of a conductive and porous carbonaceous material a porous and activated metal oxide is used as a support.

10. A platinum-based catalyst according to claims 1 - 5 prepared according to claims 6-9 in which the platinum content varies between 0.1 and 50% in weight with respect to the support.

11. A platinum-iron-based catalyst according to claims 1 - 5 prepared according to claims 6 - 9, in which the overall metal content varies between 0.1 and 50% in weight with respect to the support and the atomic ratio between platinum and iron varies between 99:1 and 1:99.

12. A platinum-ruthenium-based catalyst according to claims 1 - 5 prepared according to claims 6 - 9, in which the overall metal content varies between 0.1 and 50% in weight with respect to the support and the atomic ratio between platinum and ruthenium varies between 99:1 and 1:99.

13. A platinum-cobalt-based catalyst according to claims 1 - 5 prepared according to claims 6 - 9, in which the overall metal content varies between 0.1 and 50% in weight with respect to the support and the atomic ratio between platinum and cobalt varies between 99:1 and 1:99.

14. A platinum-rhodium-based catalyst according to claims 1-5 prepared according to claims 6 - 9, in which the overall metal content varies between 0.1 and 50% in weight with respect to the support and the atomic ratio between platinum and rhodium varies between 99:1 and 1:99.

15. A platinum-iridium-based catalyst according to claims 1 - 5 prepared according to claims 6 - 9, in which the overall metal content varies between 0.1 and 50% in weight with respect to the support and the atomic ratio between platinum and iridium varies between 99:1 and 1:99.

16. A platinum-nickel-based catalyst according to claims 1 - 5 prepared according to claims 6 - 9, in which the overall metal content varies between 0.1 and 50% in weight with respect to the support and the atomic ratio between platinum and nickel varies between 99:1 and 1:99.

17. A platinum-palladium-based catalyst according to claims 1 - 5 prepared according to claims 6 - 9, in which the overall metal content varies between 0.1 and 50% in weight with respect to the support and the atomic ratio between platinum and palladium varies between 99:1 and 1:99.

18. A platinum-tin-based catalyst according to claims 1-5 prepared according to claims 6 - 9, in which the overall metal content varies between 0.1 and 50% in weight with respect to the support and the atomic ratio between platinum and tin varies between 99:1 and 1:99.

19. A platinum-molybdenum-based catalyst according to claims 1-5 prepared according to claims 6 - 9, in which the overall metal content varies between 0.1 and 50% in weight with respect to the support and the atomic ratio between platinum and molybdenum varies between 99:1 and 1:99.

20. A catalyst according to claims 1-5 based on platinum and any other metal of the Periodic Table of the Elements, prepared according to claims 6 - 9, in which the total metal content varies between 0.1 and 50% in weight with respect to the support and the atomic ratio between platinum and the selected metal varies between 99:1 and 1:99.

21. A catalyst according to claims 1 - 5 based on platinum in conjunction with two or more metals, prepared according to claims 6 - 9, in which the total metal content varies between 0.1 and 50% in weight with respect to the support and the atomic ratio of the metals varies in every possible combination.

22. An electrode for fuel cells consisting of a catalyst according to the claims 10 - 21.

23. An electrochemical fuel cell for the production of electrical power comprising catalyzed electrodes according to claim 22 and a proton exchange membrane.

24. An electrochemical fuel cell for the production of electrical power comprising catalyzed electrodes according to claim 22 and an anion exchange membrane.

25. An electrochemical fuel cell for the production of electrical power comprising a catalyzed anode according to claim 22 and a known cathode for the reduction of oxygen in a fuel cell.

26. An electrochemical fuel cell for the production of electrical power comprising a catalyzed cathode according to claim 22 and a known anode for the oxydation of hydrogen in a fuel cell.

27. An electrochemical fuel cell according to claims 23 and 24 containing a liquid alkaline electrolyte.

28. An electrochemical fuel cell according to claims 23 and 24 containing a liquid acid electrolyte.

29. An electrochemical fuel cell according to claims 23-28 in which the fuel is hydrogen gas, reformed hydrogen gas; alcohols preferably methanol, ethanol, ethylene glycol; hydrazine and hydroxylamine; alkali metal borohydrides with various metal and non-metal cations; aldehydes; acids; hydrocarbons such as methane (natural gas), ethane, propane and butane; fossil fuels such as gasoline and kerosene.

## Patentansprüche

1. Anoden- und Kathodenkatalysatoren für Brennstoffzellen mit einem geringen Platingehalt, erhalten durch Behandlung mit einem Reduktionsmittel oder Wasserstoff und/oder Pyrolyse von Metallkomplexen, die durch Platinsalze allein oder in Kombination mit anderen Metallen und Polymere gebildet werden, die durch Kondensation eines 4-{1-[(Phenyl-2,4-disubstituiertes)-Hydrazin]-alkyl-benzol-1,3-diol mit einem 3,5-disubstituierten Phenol und Formaldehyd oder para-Formaldehyd in der Gegenwart eines sauren oder basischen Katalysators in Wasser/Alkohol-Mischungen und bei einer Temperatur im Bereich von 20 - 150 °C und mit einem Molekulargewicht im Bereich zwischen 1000 und 50000 erhalten werden.

2. Katalysatoren gemäß Anspruch 1, wobei das 4-{1-[(Phenyl -2,4-disubstituierte)-Hydrazin]-alkyl-benzol-1,3-diol eine Verbindung der Formel (A) 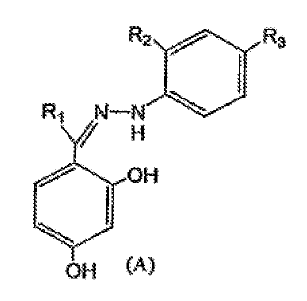 ist, in welcher R₁ ausgewählt wird aus der Gruppe bestehend aus: H, Kohlenwasserstoffrest mit 1 -10 Kohlenstoffatomen, gegebenenfalls halogeniert;
R₂ und R₃ unabhängig voneinander eine elektronenanziehende Gruppe darstellen, ausgewählt aus der Gruppe bestehend aus: H, Halogen, Acyl, Ester, Carbonsäure, Formyl, Nitril, Sulfonsäure, Arylgruppen oder linearen oder verzeigten Alkylresten mit 1 - 15 Kohlenstoffatomen, gegebenenfalls mit Halogenen funktionalisiert oder miteinander verbunden, um einen oder mehrere mit dem Phenylring kondensierte Cyclen zu bilden, sowie Nitrogruppen;
und
das 3,5-disubstituierte Phenol eine Verbindung der Formel (B) 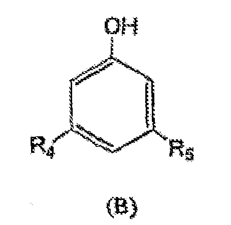 ist, in welcher R₄ und R₅ unabhängig voneinander eine Elektronendonorgruppe darstellen, ausgewählt aus H, OH, Ether, Amin, Aryl und linearen oder verzweigten Alkylgruppen mit 1 -15 Kohlenstoffatomen.

3. Katalysatoren gemäß den Ansprüchen 1 und 2, wobei genannte Polymere durch die Formel (C) 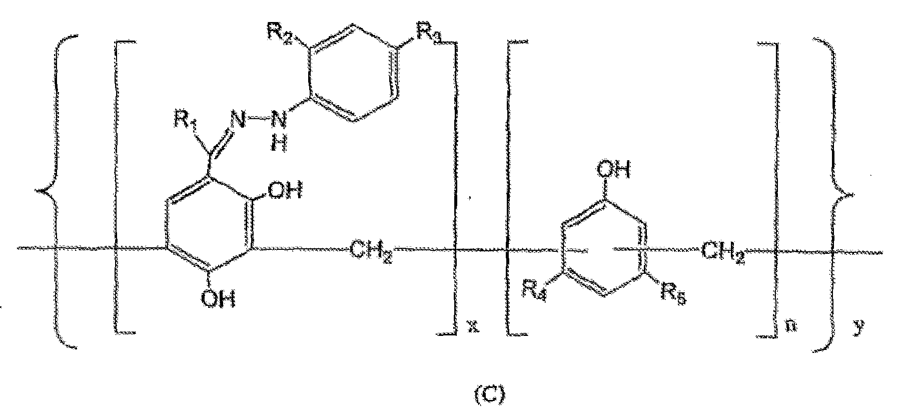 dargestellt werden, in welcher y zwischen 2 und 120 liegt, x zwischen 1 und 2 liegt, n zwischen 1 und 3 liegt und R₁, R₂, R₃, R₄ und R₅ wie in Anspruch 2 definiert sind.

4. Katalysatoren gemäß den Ansprüchen 1 - 3, wobei die Metalle in Kombination mit Platin aus der Gruppe bestehend aus: Fe, Ru, Co, Rh, Ir, Ni, Pd, Mo, Sn, La, V, Mn ausgewählt werden.

5. Katalysatoren gemäß den Ansprüchen 1 - 4, wobei genannte Salze aus der Gruppe bestehend aus: Carboxylaten, Halogenen, Alkoholaten, Acetylacetonaten, Formaten, Oxalaten, Malonaten und analogen organischen Salzen und ihren Mischungen oder Carbonatoxiden oder Bicarbonaten und ihren Mischungen ausgewählt werden.

6. Verfahren zur Herstellung eines Katalysators gemäß den Ansprüchen 1 - 5, in welchem:
- ein Platinsalz oder eine Platinverbindung zuerst durch ein Polymer wie in den Ansprüchen 1 und 3 definiert komplexiert wird;
- der resultierende Komplex Polymer-Pt auf einen Träger aus leitfähigen und porösen, kohlenstoffhaltigen Materialien gebracht wird, und schließlich das resultierende Produkt:
- in dem festen Zustand mit einem Reduktionsmittel behandelt, abfiltriert und gewaschen wird; oder
- der resultierende Komplex mittels Lösungsverdampfung isoliert wird und mit einem Strom aus Wasserstoff bei einer Temperatur zwischen 300 - 800 °C behandelt oder in einer Inertgasatmosphäre bei 500 - 900 °C erhitzt wird.

7. Verfahren zur Herstellung eines Katalysators gemäß den Ansprüchen 1 - 5, in welchem:
- eine Mischung, bestehend aus einem Platinsalz oder einer Platinverbindung und einem weiteren Metallsalz zuerst durch das Polymer wie in den Ansprüchen 1 und 3 definiert komplexiert wird;
- auf einen Träger aus leitfähigen und porösen, kohlenstoffhaltigen Materialien gebracht wird, der im Stand der Technik bekannt ist, und schließlich das resultierende Produkt:
- in dem festen Zustand mit einem Reduktionsmittel behandelt, abfiltriert und gewaschen wird; oder
- der resultierende Komplex mittels Lösungsverdampfung isoliert wird und mit einem Strom aus Wasserstoff bei einer Temperatur zwischen 300 - 800 °C behandelt oder in einer Inertgasatmosphäre bei 500 - 900 °C erhitzt wird.

8. Verfahren zur Herstellung eines Katalysators gemäß den Ansprüchen 1 - 5, in welchem:
- eine Mischung, bestehend aus einem Platinsalz oder einer Platinverbindung und zwei weiteren Metallsalzen zuerst durch das Polymer wie in den Ansprüchen 1 und 3 definiert komplexiert wird;
- das resultierende Produkt auf einen Träger aus leitfähigen und porösen, kohlenstoffhaltigen Materialien gebracht wird, der im Stand der Technik bekannt ist, und schließlich das resultierende Produkt:
- in dem festen Zustand mit einem Reduktionsmittel behandelt, abfiltriert und gewaschen wird; oder
- der resultierende Komplex mittels Lösungsverdampfung isoliert wird und mit einem Strom aus Wasserstoff bei einer Temperatur zwischen 300 - 800 °C behandelt oder in einer Inertgasatmosphäre bei 500 - 900 °C erhitzt wird.

9. Verfahren zur Herstellung eines Katalysators gemäß den Ansprüchen 6 - 8, wobei anstelle eines leitfähigen und porösen, kohlenstoffhaltigen Materials ein poröses und aktviertes Metalloxid als ein Träger verwendet wird.

10. Katalysator auf Platinbasis gemäß den Ansprüchen 1 - 5, hergestellt gemäß den Ansprüchen 6 - 9, in welchem der Platingehalt bezogen auf den Träger zwischen 0,1 und 50 Gew.-% variiert.

11. Katalysator auf Platin-Eisen-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Eisen zwischen 99:1 und 1:99 variiert.

12. Katalysator auf Platin-Ruthenium-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Ruthenium zwischen 99:1 und 1:99 variiert.

13. Katalysator auf Platin-Cobalt-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Cobalt zwischen 99:1 und 1:99 variiert.

14. Katalysator auf Platin-Rhodium-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Rhodium zwischen 99:1 und 1:99 variiert.

15. Katalysator auf Platin-Iridium-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Iridium zwischen 99:1 und 1:99 variiert.

16. Katalysator auf Platin-Nickel-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Nickel zwischen 99:1 und 1:99 variiert.

17. Katalysator auf Platin-Palladium-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Palladium zwischen 99:1 und 1:99 variiert.

18. Katalysator auf Platin-Zinn-Basis gemäß den Ansprüchen 1 - 5, hergestellt gemäß den Ansprüchen 6 - 9, in welchem der Gesamtmetallgehalt bezogen auf den Träger zwischen 0,1 und 50 Gew.-% variiert und das Atomverhältnis zwischen Platin und Zinn zwischen 99:1 und 1:99 variiert.

19. Katalysator auf Platin-Molybdän-Basis gemäß den Ansprüchen 1 - 5, hergestellt gemäß den Ansprüchen 6 - 9, in welchem der Gesamtmetallgehalt bezogen auf den Träger zwischen 0,1, und 50 Gew.-% variiert und das Atomverhältnis zwischen Platin und Molybdän zwischen 99:1 und 1:99 variiert.

20. Katalysator gemäß den Ansprüchen 1 - 5, basierend auf Platin und einem beliebigen weiteren Metall des Periodensystems der Elemente, hergestellt gemäß den Ansprüchen 6 - 9, in welchem der Gesamtmetallgehalt bezogen auf den Träger zwischen 0,1, und 50 Gew.-% variiert und das Atomverhältnis zwischen Platin und dem gewählten Metall zwischen 99:1 und 1:99 variiert.

21. Katalysator gemäß den Ansprüchen 1-5, basierend auf Platin in Verbindung mit zwei oder mehr Metallen, hergestellt gemäß den Ansprüchen 6 - 9, in welchem der Gesamtmetallgehalt bezogen auf den Träger zwischen 0,1 und 50 Gew.-% variiert und das Atomverhältnis der Metalle in jeglicher möglichen Kombination variiert.

22. Elektrode für Brennstoffzellen, bestehend aus einem Katalysator gemäß den Ansprüchen 10-21.

23. Elektrochemische Brennstoffzelle für die Herstellung von elektrischem Strom, umfassend katalysierte Elektroden gemäß Anspruch 22 und eine Protonenaustauschmembran.

24. Elektrochemische Brennstoffzelle für die Herstellung von elektrischem Strom, umfassend katalysierte Elektroden gemäß Anspruch 22 und eine Anionenaustauschmembran.

25. Elektrochemische Brennstoffzelle für die Herstellung von elektrischem Strom, umfassend eine katalysierte Anode gemäß Anspruch 22 und eine bekannte Kathode für die Reduktion von Sauerstoff in einer Brennstoffzelle.

26. Elektrochemische Brennstoffzelle für die Herstellung von elektrischem Strom, umfassend eine katalysierte Kathode gemäß Anspruch 22 und eine bekannte Anode für die Oxidation von Wasserstoff in einer Brennstoffzelle.

27. Elektrochemische Brennstoffzelle gemäß den Ansprüchen 23 und 24, enthaltend einen flüssigen, basischen Elektrolyt.

28. Elektrochemische Brennstoffzelle gemäß den Ansprüchen 23 und 24, enthaltend einen flüssigen, sauren Elektrolyt.

29. Elektrochemische Brennstoffzelle gemäß den Ansprüchen 23 - 28, in welcher der Brennstoff Wasserstoffgas, reformiertes Wasserstoffgas, Alkohole, Methanol, Ethanol, Ethylenglykol, Hydrazin und Hydroxylamin; Alkalimetallborhydride mit verschiedenen Metall- und Nichtmetallkationen, Aldehyde, Säuren, Kohlenwasserstoffe wie z. B. Methan (natürliches Gas), Ethan, Propan und Butan, fossile Brennstoffe wie Benzin und Kerosin ist.

## Revendications

1. Catalyseurs d'anode et de cathode pour des piles à combustible ayant une faible teneur en platine, que l'on obtient par traitement avec un agent réducteur ou de l'hydrogène et/ou pyrolyse de complexes de métaux formés par des sels de platine, seuls ou en combinaison avec d'autres métaux, et des polymères obtenus par condensation de 4-{1-[hydrazine(phényl-2,4-disubstituée)]alkyl}-benzène-1,3-diol avec un phénol 3,5-disubstitué et du formaldéhyde ou du para-formaldéhyde en présence d'un catalyseur acide ou basique dans des mélanges eau/alcool et à une température comprise entre 20 et 150°C et ayant un poids moléculaire compris entre 1000 et 50000.

2. Catalyseurs selon la revendication 1, où le 4-{1-hydrazine(phényl-2,4-disubstituée]-alkyl}-benzène-1,3-diol est un composé de formule (A) 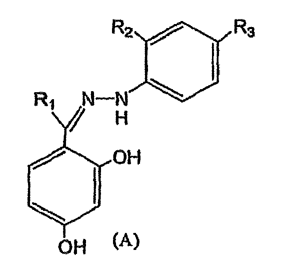 où R₁ est choisi dans le groupe consistant en : H, radical hydrocarbure ayant 1-10 atomes de carbone, éventuellement halogéné ;
R₂ et R₃ indépendamment l'un de l'autre représentent un groupe attirant les électrons choisi dans le groupe consistant : H, halogène, acyle, ester, acide carboxylique, formyle, nitrile, acide sulfonique, groupes aryles ou alkyle linéaire ou ramifié ayant 1-15 atomes de carbone, éventuellement fonctionnalisés avec des halogènes ou joints les uns aux autres afin de former un ou plusieurs cycles condensés avec le cycle phényle, et des groupes nitro ; et
le phénol 3,5 disubstitué est un composé de formule (B) 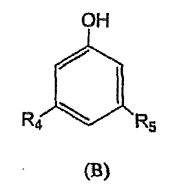 où R₄ et R₅ indépendamment l'un de l'autre représentent un groupe donneur d'électrons choisi parmi H, OH, éther, amine, aryle et groupes alkyles linéaires ou ramifiés ayant 1-15 atomes de carbone.

3. Catalyseurs selon les revendications 1-2 où lesdits polymères sont représentés par la formule (C) 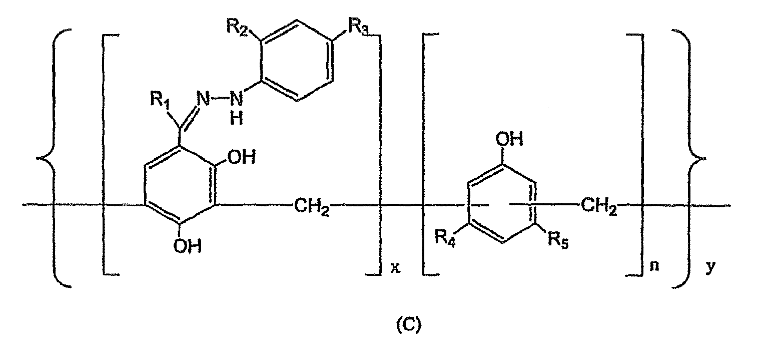 où Y est compris entre 2 et 120, x est compris entre 1 et 2, n est compris entre 1 et 3 et R₁, R₂, R₃, R₄ et R₅ sont tels que définis à la revendication 2.

4. Catalyseurs selon les revendications 1-3 où les métaux en combinaison avec le platine sont choisis dans le groupe consistant en Fe, Ru, Co, Rh, Ir, Ni, Pd, Mo, Sn, La, V, Mn.

5. Catalyseurs selon les revendications 1-4, où lesdits sels sont choisis dans le groupe consistant en carboxylates, halogènes, alcoolates, acétylacétonates, formiates, oxalates, malonates et sels organiques analogues et leurs mélanges ou oxydes de carbonate ou bicarbonates et leurs mélanges.

6. Procédé pour la préparation d'un catalyseur selon les revendications 1-5 où :
- un sel de platine ou un composé de platine est d'abord complexé par un polymère tel que défini aux revendications 1 et 3 ;
- le complexe résultant polymère-Pt est supporté sur des matières carbonées conductrices et poreuses, et enfin le produit résultant est :
- traité à l'état solide avec un agent réducteur, filtré et lavé ; ou
- le complexe résultant est isolé par évaporation du solvant et est traité avec un courant d'hydrogène à une température comprise entre 300 et 800°C ou bien chauffé dans une atmosphère d'un gaz inerte à 500-900°C.

7. Procédé pour la préparation d'un catalyseur selon les revendications 1-5 où :
- un mélange constitué par un sel de platine ou un composé de platine et un autre sel de métal est d'abord complexé par le polymère tel que défini aux revendications 1 et 3 ;
- supporté sur des matières carbonées conductrices et poreuses connues dans l'état de l'art et enfin le produit résultant est :
- traité à l'état solide avec un agent réducteur, filtré et lavé ; ou
- le complexe résultant est isolé par évaporation du solvant et traité avec un courant d'hydrogène à une température comprise entre 300 et 800°C ou bien est chauffé dans une atmosphère d'un gaz inerte à 500-900°C.

8. Procédé pour la préparation d'un catalyseur selon les revendications 1-5 où :
- un mélange constitué par un sel de platine ou un composé de platine et deux autres sels et d'abord complexé par le polymère tel que défini aux revendications 1 et 3 ;
- le produit résultant est supporté sur des matières carbonées conductrices et poreuses connues dans l'état de l'art, et enfin le produit résultant est :
- traité à l'état solide avec un agent réducteur, filtré et lavé ; ou
- le complexe résultant est isolé par évaporation du solvant et traité avec un courant d'hydrogène à une température comprise entre 300 et 800°C ou bien est chauffé dans une atmosphère d'un gaz inerte à 500-900°C.

9. Procédé pour la préparation d'un catalyseur selon les revendications 6-8 où, à la place d'une matière carbonée conductrice et poreuse, un oxyde de métal poreux et activé est utilisé comme support.

10. Catalyseur à base de platine selon les revendications 1-5 préparé selon les revendications 6-9 dans lequel la teneur en platine varie entre 0,1 et 50% en poids par rapport au support.

11. Catalyseur à base de platine-fer selon les revendications 1-5 préparé selon les revendications 6-9 dans lequel la teneur totale en métaux varie entre 0,1 et 50% en poids par rapport au support et le rapport atomique entre le platine et le fer varie entre 99:1 et 1:99.

12. Catalyseur à base de platine-ruthénium selon les revendications 1-5 préparé selon les revendications 6-9 dans lequel la teneur totale en métaux varie entre 0,1 et 50% en poids par rapport au support et le rapport atomique entre le platine et le ruthénium varie entre 99:1 et 1:99.

13. Catalyseur à base de platine-cobalt selon les revendications 1-5 préparé selon les revendications 6-9 dans lequel la teneur totale en métaux varie entre 0,1 et 50% en poids par rapport au support et le rapport atomique entre le platine et le cobalt varie entre 99:1 et 1:99.

14. Catalyseur à base de platine-rhodium selon les revendications 1-5 préparé selon les revendications 6-9 dans lequel la teneur totale en métaux varie entre 0,1 et 50% en poids par rapport au support et le rapport atomique entre le platine et le rhodium varie entre 99:1 et 1:99.

15. Catalyseur à base de platine-iridium selon les revendications 1-5 préparé selon les revendications 6-9 dans lequel la teneur totale en métaux varie entre 0,1 et 50% en poids par rapport au support et le rapport atomique entre le platine et l'iridium varie entre 99:1 et 1:99.

16. Catalyseur à base de platine-nickel selon les revendications 1-5 préparé selon les revendications 6-9 dans lequel la teneur totale en métaux varie entre 0,1 et 50% en poids par rapport au support et le rapport atomique entre le platine et le nickel varie entre 99:1 et 1:99.

17. Catalyseur à base de platine-palladium selon les revendications 1-5 préparé selon les revendications 6-9 dans lequel la teneur totale en métaux varie entre 0,1 et 50% en poids par rapport au support et le rapport atomique entre le platine et le palladium varie entre 99:1 et 1:99.

18. Catalyseur à base de platine-étain selon les revendications 1-5 préparé selon les revendications 6-9 dans lequel la teneur totale en métaux varie entre 0,1 et 50% en poids par rapport au support et le rapport atomique entre le platine et l'étain varie entre 99:1 et 1:99.

19. Catalyseur à base de platine-molybdène selon les revendications 1-5 préparé selon les revendications 6-9 dans lequel la teneur totale en métaux varie entre 0,1 et 50% en poids par rapport au support et le rapport atomique entre le platine et le molybdène varie entre 99:1 et 1:99.

20. Catalyseur selon les revendications 1-5 à base de platine et de tout autre métal de la Table Périodique des Eléments, préparé selon les revendications 6-9, dans lequel la teneur totale en métaux varie entre 0,1 et 50% en poids par rapport au support et le rapport atomique entre le platine et métal sélectionné varie entre 99:1 et 1:99.

21. Catalyseur selon les revendications 1-5 à base de platine en conjonction avec deux métaux ou plus, préparé selon les revendications 6-9, dans lequel la teneur totale en métaux varie entre 0,1 et 50% en poids par rapport au support et le rapport atomique des métaux varie à toute combinaison possible.

22. Electrode pour piles à combustible consistant en un catalyseur selon les revendications 10-21.

23. Pile à combustible électrochimique pour la production de puissance électrique comprenant des électrodes catalysées selon la revendication 22 et une membrane échangeuse de protons.

24. Pile à combustible électrochimique pour la production de puissance électrique comprenant des électrodes catalysées selon la revendication 25 et une membrane échangeuse d'anions.

25. Pile à combustible électrchimique pour la production de puissance électrique comprenant une anode catalysée selon la revendication 22 et une cathode connue pour la réduction de l'oxygène dans une pile à combustible.

26. Pile à combustible électrochimique pour la production de puissance électrique comprenant une cathode catalysée selon la revendication 22 et une anode connue pour l'oxydation de l'hydrogène dans une pile à combustible.

27. Pile à combustible électrochimique selon la revendication 23 et 24 comprenant un électrolyte alcalin liquide.

28. Pile à combustible électrochimique selon la revendication 23 comprenant un électrolyte acide liquide.

29. Pile à combustible électrochimique selon les revendications 23-28 dans laquelle le combustible est de l'hydrogène gazeux, de l'hydrogène gazeux reformé ; des alcools, de préférence méthanol, éthanol, éthylène glycol ; de l'hydrazine et de l'hydroxylamine ; des borohydrures de métaux alcalins avec divers cations de métaux et non métaux, des aldéhydes, des acides ; des hydrocarbures tels que méthane (gaz naturel), éthane, propane et butane ; des combustibles fossiles comme l'essence et le kérosène.
